# EUROPEAN PATENT APPLICATION

(11) **EP 4 801 163 A1**
(43) Date of publication of application: **02.09.2026**
(21) Application number: 24881672.0
(22) Date of filing: 24.10.2024
(51) Int. Cl.: H04W 72/20

(54) **TRANSMISSION METHOD, TERMINAL, NODE, DEVICE, AND MEDIUM**

(30) Priority: 24.10.2023 CN 202311385695
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: ZHENG, Yi, Beijing 100032 (CN); HU, Lijie, Beijing 100032 (CN); XU, Xiaodong, Beijing 100032 (CN)
(74) Representative: Herrero & Asociados, S.L.
(86) International application number: PCT/CN2024/126924
(87) International publication number: WO 2025/087308

(57) **Abstract**

The present disclosure relates to the field of communications, and provides a transmission method, a terminal, a node, a device, and a medium. The transmission method comprises: receiving configuration information sent by a first network node or a second network node; and sending a first message to the second network node on the basis of the configuration information, wherein the configuration information comprises a configuration of the first message, and the first message is used for waking up the second network node.

## Description

### CROSS REFERENCE TO RELATED APPLICATIONS

The present application claims the priority of the Chinese patent application No. 202311385695.5, filed on October 24, 2023, contents of which are incorporated herein by its entireties.

### TECHNICAL FIELD

Embodiments of the present disclosure relate to the technical field of communication, and more specifically, to a transmission method, a terminal, a node, a device, and a medium.

### BACKGROUND

In the related art, in order to save energy consumption of network transmission, various network energy-saving means may be introduced. For a network energy-saving transmission method in the art, when a network node is transmitting a Physical Downlink Shared Channel (PDSCH), an energy-saving technology may be applied at a power domain and at a base station radio frequency end. However, for transmission and reception of other signals, such as transmission of a common reference signal, no energy-saving operation may be performed, and that is, the common reference signal may be constantly transmitted. The common reference signal may still account for a large portion of the energy consumption of the network node, leading to a poor energy-saving effect for the network in the art.

### SUMMARY

The present disclosure provides a transmission method, a terminal, a node, a device, and a medium, so as to solve issues of the poor energy-saving effect in the network in the art.

In order to solve the above technical problems, the present disclosure is achieved as follows.

In a first aspect, the present disclosure provides a transmission method, applied to a terminal; and the method includes:
Receiving configuration information sent by a first network node or a second network node; and
Sending a first message to the second network node according to the configuration information.

The configuration information includes configuration of the first message; and the first message is configured to wake up the second network node.

In a second aspect, the present disclosure provides a transmission method, applied to a first network node; and the method includes:

Sending configuration information or second indication information to a terminal.

The configuration information includes configuration of a first message; the first message is configured to wake up a second network node.

The second indication information indicates a time or a time window for the terminal to receive the configuration information or indicates an operating time or an activation time or a transmission time of the second network node.

In a third aspect, the present disclosure provides a transmission method, applied to a second network node; and the method includes:
Receiving a first message sent by a terminal; and
Enabling the second network node to perform downlink transmission or uplink transmission.

In a fourth aspect, the present disclosure provides a terminal, including:
A first receiving module, configured to receive configuration information sent by a first network node or a second network node; and
A first sending module, configured to send a first message to the second network node according to the configuration information.

The configuration information includes configuration of the first message; the first message is configured to wake up the second network node.

In a fifth aspect, the present disclosure provides an electronic device, including a transceiver.

The transceiver is configured to receive configuration information sent by a first network node or a second network node.

The transceiver is configured to send a first message to the second network node according to the configuration information.

The configuration information includes configuration of the first message; the first message is configured to wake up the second network node.

In a sixth aspect, the present disclosure provides a first network node, including:
A second sending module, configured to send configuration information or second indication information to a terminal.
The configuration information includes configuration of a first message; the first message is configured to wake up a second network node.

The second indication information is configured to indicate a time or a time window for the terminal to receive the configuration information or indicate an operating time or an activation time or a transmission time of the second network node.

In a seventh aspect, the present disclosure provides an electronic device, including a transceiver.

The transceiver is configured to send configuration information or second indication information to a terminal.

The configuration information includes configuration of a first message; the first message is configured to wake up a second network node.

The second indication information is configured to indicate a time or a time window for the terminal to receive the configuration information or indicate an operating time or an activation time or a transmission time of the second network node.

In an eighth aspect, the present disclosure provides a second network node, including:
A second receiving module, configured to receive a first message sent by a terminal; and
A processing module, configured to enable the second network node to perform downlink transmission or uplink transmission.

In a ninth aspect, the present disclosure provides an electronic device, including a transceiver and a processor.

The transceiver is configured to receive a first message sent by a terminal.

The processor is configured to enable the electronic device to perform downlink transmission or uplink transmission.

In a tenth aspect, the present disclosure provides an electronic device, including: a processor, a memory, and a program stored on the memory and executable on the processor. The program, when being executed by the processor, is configured to implement operations of the transmission method according to the first aspect; or, the program, when being executed by the processor, is configured to implement operations of the transmission method according to the second aspect; or, the program, when being executed by the processor, is configured to implement operations of the transmission method according to the third aspect.

In an eleventh aspect, the present disclosure provides a computer-readable storage medium, having a computer program stored thereon. The computer program, when being executed by a processor, is configured to implement operations of the transmission method according to the first aspect; or, the computer program, when being executed by a processor, is configured to implement operations of the transmission method according to the second aspect; or, the computer program, when being executed by a processor, is configured to implement operations of the transmission method according to the third aspect.

According to the present disclosure, configuration information sent by the first network node or the second network node may be received; the first message may be sent to the second network node according to the configuration information. The configuration information may include configuration of the first message. The first message may be configured to wake up the second network node. In the embodiments of the present disclosure, by applying the energy-saving approach in which the network node may be waken up, an energy-saving efficiency of a communication system may be improved.

### BRIEF DESCRIPTION OF THE DRAWINGS

In order to explain technical solutions of the embodiments of the present disclosure more clearly, drawings for describing the embodiments of the present disclosure will be briefly introduced in the following. Obviously, the drawings in the following may be only some embodiments of the present disclosure. Any ordinary skilled artisan in the art shall obtain other drawings based on the drawings without making any creative effort.
FIG. 1 is a flow chart of a transmission method according to an embodiment of the present disclosure
FIG. 2 is a structural diagram of a wireless communication system applicable to an embodiment of the present disclosure.
FIG. 3 is a flow chart of another transmission method according to an embodiment of the present disclosure.
FIG. 4 is a schematic diagram of a transmission occasion according to an embodiment of the present disclosure.
FIG. 5 is a flow chart of another transmission method according to an embodiment of the present disclosure.
FIG. 6 is a flow chart of another transmission method according to an embodiment of the present disclosure.
FIG. 7 is a schematic structural diagram of a terminal according to an embodiment of the present disclosure.
FIG. 8 is a schematic structural diagram of an electronic device according to an embodiment of the present disclosure.
FIG. 9 is a schematic structural diagram of a first network node according to an embodiment of the present disclosure.
FIG. 10 is a schematic structural diagram of another electronic device according to an embodiment of the present disclosure.
FIG. 11 is a schematic structural diagram of a second network node according to an embodiment of the present disclosure.
FIG. 12 is a schematic structural diagram of another electronic device according to an embodiment of the present disclosure.

### DETAILED DESCRIPTIONS

The technical solutions in the embodiments of the present disclosure will be described clearly and completely below by referring to the accompanying drawings in the embodiments of the present disclosure. Obviously, the described embodiments are part of, not all of, the embodiments of the present disclosure. All other embodiments, which are obtained by any ordinary skilled artisan in the art based on the embodiments in the present disclosure without creative work, shall fall within the scope of the present disclosure.

Terms "first", "second", and so on, in the specification and claims of the present disclosure are used to distinguish similar objects from each other and are not necessarily used to describe a specific order or sequence.

To facilitate understanding, some contents involved in the embodiments of the present disclosure will be explained below.

For a network energy-saving transmission method in the art, when a network node is transmitting a PDSCH, an energy-saving technology may be applied at a power domain and a base station radio frequency end. However, for transmission and reception of other signals, such as transmission of a common reference signal, no energy-saving operation may be performed, and that is, the common reference signal may be constantly transmitted. The common reference signal may still account for a large portion of energy consumption of the network node, leading to a poor energy-saving effect in the network in the art.

The present disclosure provides an energy-saving method of waking up a network node. When the network node, before being woken up, is in an off state or an energy-saving state, the above-mentioned common signal may not be sent, and at the same time, a radio frequency and a baseband of the base station may be turned off or energy-saving, such that an almost 100% energy-saving effect may be achieved. However, after the network node is turned off, an original coverage area of the network node may be covered by another network node. However, since the original coverage area may be at a long distance to the another network node, service performance may not be ideal. Therefore, a means to wake up the base station may be needed. After the network node is woken up, a service effect and performance of the woken network node may be better than a situation where any adjacent network node provides coverage. In the related art, a technical approach in which the base station may be sleeping and energy-saving and may be woken up when needed may be lack. The present disclosure provides an energy-saving method of waking up the network node, and energy saving and network communication coverage may both be achieved appropriately.

The present disclosure provides a transmission method, a terminal, a node, a device and a medium, so as to solve the issue of the poor energy-saving effect in the network in the art.

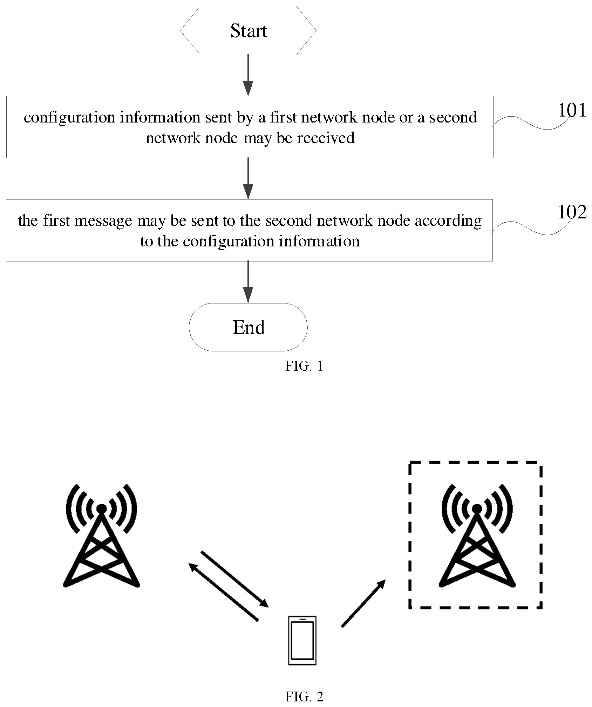

As shown in FIG. 1, FIG. 1 is a flow chart of a transmission method according to an embodiment of the present disclosure, and the method may be performed by a terminal. As shown in FIG. 1, the method may include the following blocks.

In a block 101, configuration information sent by a first network node or a second network node may be received.

Terms "first", "second", and so on, in the specification and claims of the present disclosure may be used to distinguish similar objects from each other and are not used to describe a specific order or sequence. It should be understood that data used described thereby may be interchanged under appropriate circumstances, such that the embodiments of the present disclosure may be implemented in an order other than the order illustrated or described herein. Moreover, objects distinguished by the "first", the "second", and so on, may be of one type, and the number of the objects may not be limited. For example, the number of a first object may be one or more than one. In addition, "and/or" in the specification and claims represents at least one of the described objects, and the character "/" generally indicates that an object before the character "or" and an object after the character.

It is understandable that in a scenario where the network node is already turned off or in the energy-saving state, the network node may not send any signal, including a downlink synchronization signal/physical broadcast channel (PBCH) signal block or a synchronization signal block (SSB) or a system information block (SIB), a user equipment (UE) may not perform downlink synchronization with a target cell and may send an uplink wake-up signal for waking up the second network node. The UE may lack a downlink timing reference. Specifically, since the target cell does not send the SSB at all or does not send the SSB at a certain time point to serve as reference for the UE to perform transmission. Signal composition, a transmission occasion, a transmission direction, and so on, of the wake-up signal may not be defined. An existing transmission behavior may not be reused for the transmission direction of the transmitted signal. Accordingly, in the embodiments of the present disclosure, the first network node or the second network node may be configured to transmit the configuration information.

As shown in FIG. 2, the first network node (a network node on a left side of the drawing) may be a currently-operating network node, and the second network node (a network node on a right side of the drawing) may be a to-be-woken-up network node.

In the embodiments of the present disclosure, in the above transmission method, at least one of data, signals, channels, and sequences may be transmitted.

In the embodiments of the present disclosure, the network node may be a base station, a cell, or a network side device, and/or a carrier or a component carrier. The network side device may include an access network device or a core network device. The access network device may also be referred to a Radio Access Network (RAN) device, a radio access network function, or a radio access network unit. The access network device may include a base station, a Wireless Local Area Network (WLAN) access point (AP), or a Wireless Fidelity (WiFi) node, and so on. The base station may be referred to as a Node B (NB), an Evolved Node B (eNB), a next generation Node B (gNB), a New Radio Node B (NR Node B), an access point, a relay base station (RBS), a serving base station (SBS), a base transceiver station (BTS), a radio base station, a radio transceiver, a basic service set (BSS), an extended service set (ESS), a home Node B (HNB), a home evolved Node B (HeNB), a transmission reception point (TRP), or any other suitable term in the relevant technical field. As long as a same technical effect can be achieved, the base station may not be limited to any specific technical vocabulary.

The above TRP may correspond to: control resource sets (CORESETs) or Physical Downlink Control Channels (PDCCHs) with various CORESET pool indices; or PDSCHs, Physical Uplink Shared Channels (PUSCHs), Physical Uplink Control Channels (PUCCHs), signals and/or channels with various transmission configuration indicator (TCI) states or spatial relations (spatial filters). The spatial filter may refer to spatial filtering.

A manner of transmitting the above configuration information may include the following.

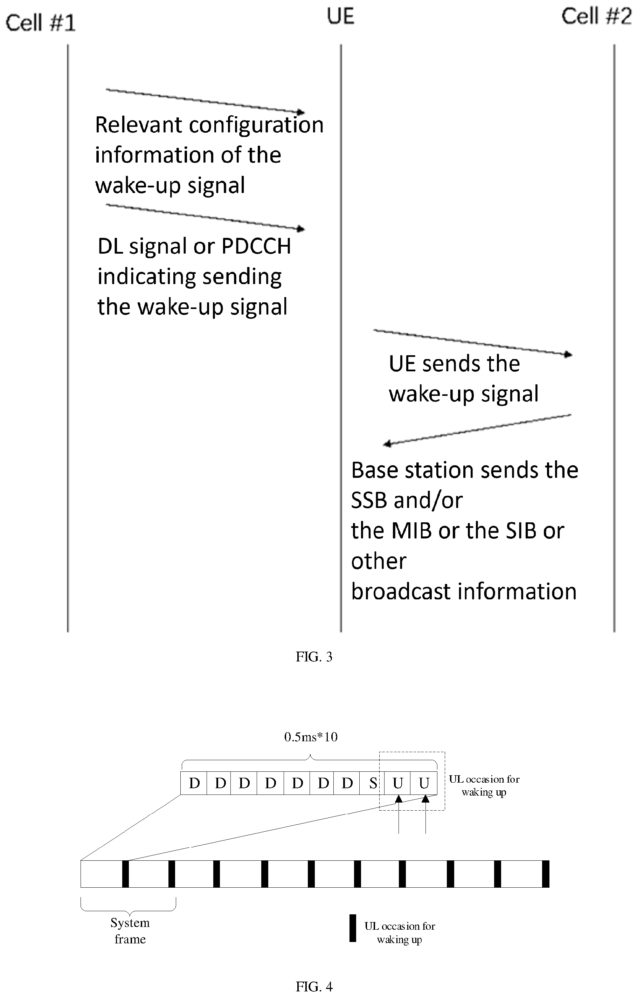

For a manner 1, the first network node may send the configuration information to the terminal, and the terminal may send the wake-up signal (i.e., a first message in a block 102 below) based on the configuration information sent by the first network node, illustratively, as shown in FIG. 3.

In a manner 2, the second network node may send the configuration information to the terminal, and the terminal may send the wake-up signal (the first message) based on the configuration information sent by the second network node.

It is understandable that the above-mentioned first network node may be in an operating state. For example, the first network node may be a cell 1, the UE may operate in the cell 1, and the UE may obtain the configuration information from the first network node.

The above-mentioned second network node may be in an off state, or a discontinuous transmission (DTX) state or a discontinuous reception (DRX) state, or an energy-saving state or a sleep state. The above-mentioned second network node may transmit and receive data at a certain specific time point or time window (such as a duration, a period, a time window). The terminal may receive the configuration information in the above specific time or time window.

In some embodiments, the second network node may send the configuration information. The configuration information may include configuration of the first message. The above configuration information sent by the second network node may be sent by broadcast or multicast, or may be sent through a master information block (MIB) or SIB information.

In some embodiments, the method may further include the following.

Second indication information sent by the first network node may be received.

The second indication information may indicate the time or the time window for the terminal to receive the configuration information or indicate an operating time or an activation time or a transmission time of the second network node.

In an embodiment of the present disclosure, the first network node may inform, through the second indication information, the terminal of the time or the time window for receiving the above configuration information. Specifically, the first network node may inform the terminal to perform reception at the time or the time window for receiving the configuration information sent by the second network node.

For example, the configuration information may alternatively be received within a downlink transmission time window of a second cell. The cell 1 (the first network node) may indicate the downlink transmission time (the time window) of the cell 2 (the second network node), and the terminal may perform downlink reception within the time (the time window) to obtain the relevant configuration information. For a corresponding behavior, the cell 1 may indicate the downlink transmission time of the cell 2 to the UE, and the UE may perform reception within the corresponding time of the cell 2 to obtain the configuration information for waking up the cell 2.

In some embodiments, the configuration information may include at least one of the following:
Offset information, being an offset associated with the second network node;
Transmission occasion information;
Configuration information of the second network node; and
Configuration information of the first message.

In the embodiments of the present disclosure, by configuring the above information to the terminal, the terminal may send the wake-up message (the first message) to the second network node based on the above configuration information.

In some embodiments, the offset information may include at least one of the following.

A first offset may be an offset of a system frame number (SFN) of the first network node with respect to an SFN of the second network node; or the first offset may be an offset of the SFN of the second network node with respect to the SFN of the first network node.

A second offset may be an offset of a reception time window of the second network node.

Furthermore, or alternatively, the transmission occasion information may include at least one of the following.

A first transmission occasion may include an occasion for the second network node to receive uplink transmission.

A second transmission occasion may include an occasion for the terminal to send uplink transmission.

Furthermore, or alternatively, the configuration information of the second network node may include at least one of the following:
A transmission period of the second network node;
A transmission time window of the second network node;
A duration of the transmission time window of the second network node;
A parameter related to a carrier spacing of the second network node;
Time Division Duplex (TDD) configuration of the second network node.

Furthermore, or alternatively, the configuration information of the first message may include at least one of the following.
One or a plurality of uplink signals or channels;
One or a plurality of sequences;
A transmission direction of the first message.

In the embodiments of the present disclosure, since the UE operates under the first network node (such as a serving cell or the cell 1), timing of a current serving cell (the first network node) may be used as a reference, and then the UE may send the wake-up signal for the second network node (the target cell, the energy-saving cell in the off state, or the cell 2). Alternatively, since the target base station (the second network node) is completely turned off, the UE may be unable to take downlink of the target base station (the second network node) as a reference to send an uplink signal. Therefore, the downlink of the current cell (the first network node) may be used as the reference for the downlink timing of the target cell to perform signal transmission.

In some embodiments, the first offset (SFN offset), i.e., the offset of the SFN of the first network node with respect to the SFN of the second network node, may be configured; or the first offset may be the offset of the SFN of the second network node with respect to the SFN of the first network node. Based on obtaining the above first offset, the UE may send the first message (the wake-up signal) by referring to the downlink timing of the current first network node.

In an example, SFN mod period = offset.

In some embodiments, an offset value of the offset may comprise at least one of the following information: a system frame offset, subframe information, time slot information, symbol information.

In some embodiments, the second offset, i.e., the offset of the reception time window of the second network node, may be configured and may comprise information of a subframe and a time slot within a corresponding subframe.

In some embodiments, the first transmission occasion and/or the second transmission occasion may be configured. The first transmission occasion may comprise an occasion for the second network node to receive uplink transmission. The second transmission occasion may comprise an occasion for the terminal to send uplink transmission. The first transmission occasion may be configured with a plurality of occasions or occasion groups for reception, and the second transmission occasion may be configured with a plurality of occasions or occasion groups for transmission.

In an example, as shown in FIG. 4, the plurality of occasions for reception may be configured in a case where a demodulation threshold cannot be met with one occasion of reception. In this case, the base station may perform reception within a plurality of reception windows or the plurality of occasions. In this way, a plurality of attempts may be performed, and energy accumulation may be achieved from the plurality of occasions of reception.

Correspondingly, the UE may perform transmission for a plurality of times within the plurality of corresponding uplink occasions.

For an uplink occasion, each of a plurality of uplink time slots starting from a specified system frame and/or subframe may be taken as the uplink occasion.

Each occasion may be one or a plurality of time slots.

Considering that the UE may not send uplink according to the downlink timing of a second network device (such as a base station 2), the reception of the signal by the target cell may be deviated to some extent. But through defining the occasions, it may be easy for UE to take a plurality of times of transmission or reception.

The base station (the first network node or the second network node) may instruct the UE to perform transmission for a plurality of times, such as 4 times or 8 times, so as to wake up the target base station.

In some embodiments, the first transmission occasion may comprise at least one of the following:
A transmission occasion indicated by first indication information, wherein the first indication information is indication information sent by the first network node;
A transmission occasion determined according to a time at which the terminal receives the first indication information;
A transmission occasion determined according to the transmission occasion information;
A Physical Random Access Channel (PRACH) occasion;
A Sounding Reference Signal (SRS) transmission occasion or a time domain resource;
A transmission occasion determined according to a third offset, wherein the third offset is an offset with respect to the PRACH occasion.

In the embodiments of the present disclosure, the above transmission occasion may be interpreted as a transmitting occasion or a receiving occasion.

In the embodiments of the present disclosure, the transmission occasion may be the Physical Random Access Channel (PRACH) occasion. For example, an uplink PRACH signal of the UE, triggered by the base station through PDCCH, may serve as the wake-up signal. For another method for determining the transmission occasion, an offset may be added on an existing Random Access Channel (RACH) occasion, and it may be transmitted in a time slot of the uplink with the corresponding offset. In this way, sending the wake-up signal may be performed in an area other than the RACH occasion (RO), a risk of collision with the PRACH may be reduced, and interference caused by the PRACH may be reduced, an impact on a capacity of the PRACH may be reduced. A situation in which a contention based random access (CBRA) initiated by the UE may wake up a sleeping base station may be avoided, and that is, waking up a non-target and un-woken base station or cell may be avoided. That is, both the network node and the UE may not consider it as a random access procedure, and therefore, a subsequent RACH procedure (such as a 4-step RACH procedure) may not need to be initiated.

In some embodiments, sending the first message to the second network node according to the configuration information may comprise at least one of the following:
The first message may be sent to the second network node during a transmission period of the second network node.

The first message may be sent to the second network node during a transmission time window of the second network node.

The first message may be sent to the second network node during a duration of the transmission time window of the second network node.

In the embodiments of the present disclosure, the transmission period may be a receiving and/or transmitting period. The transmission time window (the duration, the period, the time window) may be a receiving and/or transmitting time window. The transmission time window may alternatively be the transmission time.

The base station (the second network node) may perform uplink reception and/or downlink transmission within the above receiving and transmitting time window. The reception period may be a period for performing uplink reception, and the transmission period may be a period for performing downlink transmission. The base station (the second network node) may perform uplink reception or transmission within the time window or the duration of the time window. The terminal may perform uplink transmission or transmission within the corresponding transmission time window or time window. The terminal may perform downlink reception or downlink transmission within the corresponding downlink time window.

In the embodiments of the present disclosure, the reception time window of the second network node may correspond to transmission of the terminal or the transmission time window of the terminal. Within the transmission time window, the terminal may perform transmission or sending.

In some embodiments, the reception period and/or reception duration (duration) or the duration of the transmission time window of the second network node may be configured. The above reception period may alternatively be understood as an operating period or an activation period of the second network node, or understood as the reception time period or the period of the second network node. The above reception time window may be an operating time window or an activation time window. The above terminal may send the first message to the second network node according to the configuration information. In a case where the configuration information includes the transmission period and/or the transmission time window of the second network node, the terminal may send the first message to the second network node within the transmission period, and/or the transmission time window (or the transmission time), and/or the duration of the transmission time window of the second network node.

Since the UE cannot ideally perform downlink synchronization with the second network node (the target cell), the duration may be larger to ensure that the second network node may correctly demodulate the uplink signal which may not be transmitted according to an accurate timing. For example, the duration may be 1 or 2 time slots.

In some embodiments, the parameter related to the carrier spacing of the second network node may be configured.

The parameter related to the carrier spacing, for example, may be the carrier spacing and/or a scaling factor of the carrier spacing. Different carrier spacings may correspond to different time slot lengths and different numbers of time slots within one subframe.

In some embodiments, the time division duplexing (TDD) configuration of the second network node may be configured. For example, TDD-UL-DL configuration may be configured. The UL may refer to uplink, and the DL may refer to downlink.

In this way, the UE may perform transmission in the corresponding uplink time slot of the second network node. In order to quickly activate or start the target base station, without adjusting the timing and the TDD configuration, the target base station may start operating in the corresponding uplink time slot. The UE may perform transmission in an uplink time slot within an available system frame or subframe. The UE may perform transmission within a plurality of corresponding uplink time slots, such that an efficiency of waking up the base station may be improved. Transmission in a non-uplink time slot may cause interference to downlink users of the serving cell. By configuring TDD information, occurrence of the above situations may be reduced.

In some embodiments, the configuration information of the first message may be configured.

The configuration information of the first message may include a transmission content, a transmission direction, and a transmission sequence of the first message. For example, one or a plurality of sequences of PRACH may be configured.

In an embodiment, the above first message may be the PRACH or the sounding reference signal (SRS) or the wake-up signal (WUS). In this way, any physical layer signal of the UE or the base station may not need to be modified, the above implementation may be achieved easily, and an existing transmission and reception module and algorithm may be applied.

In an embodiment, the sequence sent in the above first message may be a specific sequence.

The specific sequence may be negotiated among a plurality of network nodes or may be configured in advance. Since it is the user that activates the cell base station, the specific user may not need to be identified. Therefore, fixing a certain sequence may be beneficial for detection of a woken-up base station. On the other hand, when a plurality of users may be able to send wake-up signals to the network node, a probability of waking up the base station may be increased. The base station may trigger a plurality of UEs to perform transmission. Since the signals are the same to each other, a transmission energy may be increased, and any technical problem involved in the transmission direction may be solved.

In some embodiments, the one or the plurality of sequences may be preset sequences.

A uniform, consistent or determined sequence may solve a technical problem of insufficient UE transmission energy, facilitating the detection and energy accumulation of the woken-up base station. The plurality of UEs may perform transmission in various directions, solving a technical problem of being unable to determine the direction of the base station without the SSB.

In the related art, various signals may refer to a transmission direction of the SSB or consider the SSB as a reference. However, a sleeping base station may not transmit the SSB. In an embodiment, the UE may perform transmission in a direction opposite to the current serving base station (the first network node).

By configuring one sequence or a small number of sequences, occupation of PRACH resources may be reduced. Even when existing RACH occasions are reused, an impact on the capacity of the PRACH may be reduced. For example, when one sequence or the small number of sequences are configured in a set B (different from a set A dedicated to CBRA), the above configuration may not be affected by the CBRA initiated by an initial access of the UE. That is, the base station may not be arbitrarily woken up without being accessed by any user.

The plurality of UEs may send the first message in the same direction or in different directions, or directions in which the plurality of UEs send the first message may be determined based on UE implementation. The direction may be transmission configuration or a transmission configuration indicator, or a spatial filter, or a spatial relation, and so on.

When the plurality of UEs send the first message in the same direction, a received power may be improved. When the current serving cell (or the base station) cannot use its own SSB or channel state information reference signal (CSI-RS) as the spatial filter or the spatial relation for the plurality of UEs to perform transmission, the plurality of UEs may send the first message in different directions. When the plurality of UEs send the first message in different directions, the probability of the network node successfully receiving the first message may be increased. The different directions may refer to the plurality of UEs sending the above first message in different directions; or refer to one UE sending the first message for a plurality of times in different directions.

In a block 102, the first message may be sent to the second network node according to the configuration information. The configuration information may include the configuration of the first message, and the first message may be configured to wake up the second network node.

Waking up the second network node may be understood as: enabling the second network node to perform downlink transmission or uplink transmission, or triggering the second network node to perform downlink transmission or uplink transmission. In some embodiments, the second node performing downlink transmission may be the second network node sending the SSB and/or the MIB or the SIB information. In some embodiments, waking up the second network node may be triggering or enabling the second network node to perform downlink transmission, or triggering or enabling the second network node to send the SSB and/or the MIB or the SIB information.

In some embodiments, the method may further include the following.

The first indication information sent by the first network node may be received.

The first indication information may be configured to instruct the terminal to send the first message.

In the embodiments of the present disclosure, sending of the first message may be triggered based on the indication information from the first network node. Sending of the above first indication information and sending of the above configuration information may be performed by a same network node or by different network nodes. Sending of the above first indication information and sending of the above configuration information may be performed simultaneously or at different time points.

A timing for the first network node to send the above first indication information may be when the first network node finds that a reference signal received power (RSRP) value or any other received power of one UE or the plurality of UEs is below a threshold, and the one UE or the plurality of UEs may be triggered to send a wake-up symbol.

In some embodiments, the first indication information sent by the first network node to the terminal may include the following.

When a measurement result of one candidate terminal or a plurality of candidate terminals meets a preset threshold, the first network node may send the first indication information to a target terminal, the target terminal may be one or more of the one candidate terminal or the plurality of candidate terminals.

In the embodiments of the present disclosure, the above measurement result may be the RSRP value, or may be a measurement result of any other reference signal. The first network node may send the first indication information to the one candidate terminal or the plurality of candidate terminals. A terminal executing the above method in the embodiments of the present disclosure may be one terminal of the above target terminal.

Meeting the preset threshold as described in the above may be any of: being greater than the preset threshold, being greater than or equal to the preset threshold, being less than the preset threshold, being less than or equal to the preset threshold, or being equal to the preset threshold.

In some embodiments, sending the first message to the second network node according to the configuration information, may include the following.

When a received power of the terminal meets a preset threshold, the first message may be sent to the second network node according to the configuration information.

In the embodiments of the present disclosure, sending of the first message may alternatively be triggered through autonomous determination of the terminal based on a received power. The received power may be the RSRP value or a Signal to Interference plus Noise Ratio (SINR). Meeting the preset threshold as described in the above may be any of: being greater than the preset threshold, being greater than or equal to the preset threshold, being less than the preset threshold, being less than or equal to the preset threshold, or being equal to the preset threshold.

In some embodiments, sending the first message to the second network node according to the configuration information, may include the following.

The first message may be sent for n times to the second network node according to the configuration information, and the n may be a positive integer greater than or equal to 1.

In the embodiments of the present disclosure, by sending the first message for a plurality of times, the probability of successfully waking up the second network node may be increased. Transmission directions (or transmission configuration, or TCI states, or spatial relations, or spatial filters) of the n times of sending the first message may be the same as or different from each other. When the first message is sent for the plurality of times in the same transmission direction, a received power may be increased. When the current serving cell (or the base station) cannot use its own SSB or the CSI-RS as the spatial filter or the spatial relation for the UE to perform transmission, the first message may be sent for the plurality of times in different transmission directions. When the first message is sent for the plurality of times in different transmission directions, the probability of the network node successfully receiving the first message may be increased. Similarly, the spatial filtering of the n times of sending the first message may be the same as or different from each other. That is, manners in which the first message is sent for the n times may be the same as or different from each other.

In some embodiments, sending the first message to the second network node, may include the following.

The first message may be sent to the second network node at a first time.

The first time may include at least one of the following:
A first time slot, a first transmission occasion, and a first timing.

In the embodiments of the present disclosure, the above first time may be determined according to the above configuration information, or may be determined according to the above first indication information, or may be determined according to any other preset method.

In some embodiments, the first time slot may include at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is indication information sent by the first network node;
The time slot determined according to the time at which the terminal receives the first indication information.

Furthermore, or alternatively, the first transmission occasion may include at least one of the following:
The transmission occasion indicated by the first indication information;
The transmission occasion determined according to the time at which the terminal receives the first indication information;
The transmission occasion determined according to the transmission occasion information;
The physical random access channel (PRACH) occasion;
The sounding reference signal (SRS) transmission occasion or a time domain resource;
The transmission occasion determined according to the third offset, wherein the third offset is the offset with respect to the PRACH occasion.

Furthermore, or alternatively, the first timing may include at least one of the following:
Timing determined according to the uplink transmission time of the first network node;
Timing determined according to the downlink transmission time of the first network node;
Timing determined according to a fourth offset, and the fourth offset being an offset indicated by the first network node with respect to a current time.

In the embodiments of the present disclosure, in a manner 1, the base station may instruct to send the wake-up signal at a determined time slot and may configure to send the wake-up signal for k times.

The uplink transmission time may be specifically indicated directly through DCI.

The UE may perform transmission at a plurality of time slots or time domain resources. The transmission may be configured to be performed in the same direction or different directions. The direction may be the spatial relation or the spatial filter, or a beam, or the TCI state. For the k times of transmission, the transmission may be performed at k consecutive time slots or at k consecutive uplink time slots, or at k available occasions. The k uplink time slots may be k available uplink time slots configured by the current base station. For example, time slots, which are determined based on TDD configuration as uplink or flexible time slots, may be the k uplink time slots, where the flexible time slots or symbols may not overlap with the SSB. The k occasions may be a plurality of wake-up occasions that are defined based on the above configuration, such as the SFN offset, the period, the system frame offset, a subframe serial number, a start symbol, and so on, and transmission may be performed at the k occasions.

By performing transmission at the uplink time slots, transmission in non-uplink time slots may be avoided, and interference to downlink users of the serving cell caused by the transmission in non-uplink time slots may be avoided.

In a manner 2, the base station may indicate and trigger the UE without specifying a specific time, and only after the indication via the DCI, the UE may perform transmission on the occasion determined according to the configuration information. The transmission may be performed for a plurality of times. For example, the transmission may be performed on the k occasions, which may be the plurality of wake-up occasions for transmission defined based on the above configuration, such as the SFN offset, the period, the system frame offset, the subframe serial number, the start symbol, and so on.

In some embodiments, a group common manner or a group manner may be applied as a manner for indicating or triggering one UE or the plurality of UEs. Users or indicated users in a user group, after receiving the DCI, may send the wake-up signal, so as to wake up the target cell. That is, the first network node may send the first indication information by broadcast or multicast. All UEs in the user group that receive the DCI may send the wake-up signal. In this way, technical problems involving energies and directions may be solved. By not limiting the transmission direction of the UEs, the plurality of users may be able to perform transmission simultaneously, an omnidirectional transmission effect may be achieved, or the target base station may receive the transmitted signal more easily.

Sending the first message may be performed based on scheduling and indication of the current serving base station (the first network node).

In this way, a), the technical problem in which the base station may be woken up due to the UE arbitrarily sending the PRACH may be avoided.

b) The base station may determine, based on information of the target UE, such as mobility information, RSRP information, and so on, that the target cell or a handover target cell of the UE is the un-woken or off cell. Therefore, the sleeping base station may be woken up more purposefully, and the UE may be prevented from arbitrarily waking up any sleeping cell or base station that may not be used.

The technical problem involving in the timing reference of uplink signal transmission, when the sleeping base station does not send the SSB, may be solved based on the occasion of the wake-up signal. The sleeping base station may be prevented from monitoring the wake-up signal from the UE at any time, avoiding additional energy consumption.

In the embodiments of the present disclosure, the time or timing for sending the uplink signal may be determined by at least one of the following manners.

In a manner 1, the time or timing for sending the uplink signal may be determined by referring to the timing of the current serving cell (the first network node) performing uplink transmission.

In a manner 2, a downlink reference time of the current cell may be used as the time for sending the uplink signal; and the timing of the UE performing downlink reception may be referred to.

In a manner 3, the base station may indicate an offset with respect to an existing timing as the time for sending the uplink signal; the time may be a time offset that may be estimated based on factors such as a propagation distance between the first network node (such as the base station 1) and the second network node (such as the base station 2) and may be used to ensure that the signal sent by the UE can be received by the second network node (the sleeping base station).

In some embodiments, the first time may include k time slots, and the k may be a positive integer greater than 1. The k time slots may be k consecutive time slots; or the k time slots may be k consecutive uplink time slots; or the k time slots may be k transmission occasions.

In some embodiments, the first transmission occasion may include a plurality of transmission sub-occasions, and each of the plurality of transmission sub-occasions may be one time slot or a plurality of time slots.

In some embodiments, a plurality of transmission occasions may be determined based on the first transmission occasion, and the plurality of transmission occasions may be used for transmitting the first signal for a plurality of times, each of the plurality of transmission occasions may be one time slot or a plurality of time slots.

In some embodiments, the first transmission occasion may include one time slot or a plurality of time slots.

In some embodiments, the second network node may receive the first message sent by the terminal, and the second network node may be enabled to perform downlink transmission or uplink transmission.

The second network node performing downlink transmission may include the second network node sending a downlink signal or channel, or sending the SSB or the SIB information, and so on.

Exemplarily, a sleeping base station (such as a base station in the DTX and/or DRX state) or a turned-off base station, and that is, the base station 2, after receiving the wake-up signal, may start to send the SSB and/or the MIB or the SIB information. In other words, waking up the base station 2 may enable the base station 2 to send the SSB and/or the MIB or the SIB information.

Specifically, after receiving the wake-up signal or correctly receiving the wake-up signal, or after the power of the received wake-up signal meets (such as being greater than, equal to, or greater than or equal to, less than, less than or equal to) a certain threshold, the base station may start to initiate downlink transmission or uplink transmission. For the transmission method in the present embodiment, the configuration information sent by the first network node or the second network node may be received; the first message may be sent to the second network node according to the configuration information. The configuration information may include the configuration of the first message; the first message may be configured to wake up the second network node. In the embodiments of the present disclosure, the energy saving efficiency of the communication system may be improved by applying the energy saving method in which the network node may be woken up.

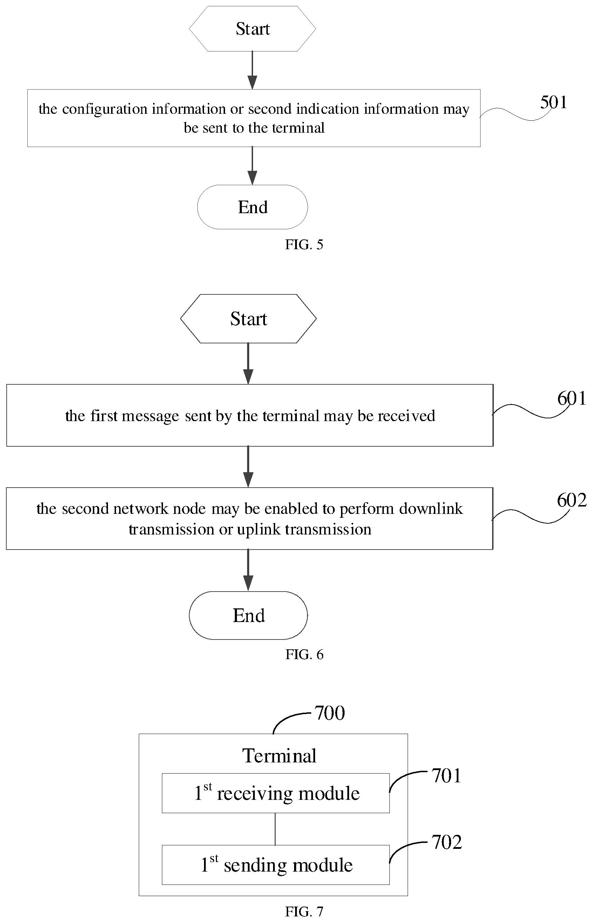

As shown in FIG. 5, FIG. 5 is a flow chart of another transmission method according to an embodiment of the present disclosure, and the transmission method may be performed by the first network node. As shown in FIG. 5, the method may include the following blocks.

In a block 501, the configuration information or second indication information may be sent to the terminal.

The configuration information may include the configuration of the first message; the first message may be configured to wake up the second network node.

The second indication information may indicate a time or a time window for the terminal to receive the configuration information; or may indicate an operating time or an activation time or a transmission time of the second network node.

In the embodiments of the present disclosure, the first network node may directly send the configuration information to the terminal, or may indicate a timing for receiving the configuration information to the terminal.

In some embodiments, the method may further include the following.

The first indication information may be sent to the terminal.

The first indication information may be configured to instruct the terminal to send the first message.

In some embodiments, sending the first indication information to the terminal may include the following.

In a case where measurement results of one candidate terminal or a plurality of candidate terminals meet a preset threshold, the first indication information may be sent to the target terminal, and the target terminal may be one or more of the one candidate terminal or the plurality of candidate terminals.

In some embodiments, the configuration information may include at least one of the following:
Offset information, the offset being an offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node.

The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following.
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.

In the embodiments of the present disclosure, the transmission period may be a period for reception and/or transmission. The transmission time window may be a time window for reception and/or transmission. The base station (the second network node) may perform uplink reception and/or downlink transmission within the above time window for reception and/or transmission. The reception period may be a period for performing uplink reception, and the transmission period may be a period for performing downlink transmission. The base station (the second network node) may perform uplink reception or transmission within the time window or the duration of the time window. The terminal may perform uplink transmission or transmission within a corresponding transmission time window or time window. The terminal may perform downlink reception or downlink transmission within a corresponding downlink time window.

In some embodiments, the one or more sequences may be preset sequences.

It should be noted that an execution subject for performing the transmission method of the embodiments of the present disclosure may be the first network node capable of executing the above transmission method, and all implementation manners in the above embodiments of the transmission method may be applicable to the transmission method in the present embodiment, and same or similar beneficial effects may be achieved. To avoid repeated description, details will not be repeated in the present embodiment.

As shown in FIG. 6, FIG. 6 is a flow chart of another transmission method according to an embodiment of the present disclosure, and the transmission method may be performed by the second network node. As shown in FIG. 6, the method may include the following blocks.

In a block 601, the first message sent by the terminal may be received.

In a block 602, the second network node may be enabled to perform downlink transmission or uplink transmission.

In some embodiments, the method may further include the following.

The configuration information may be sent.

The configuration information may include the configuration of the first message.

In some embodiments, receiving the first message sent by the terminal may include the following.

First messages that are sent for the n times by the terminal may be received, and the n may be a positive integer greater than or equal to 1.

In some embodiments, the configuration information may include at least one of the following:
Offset information, the offset being an offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following.
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.

In some embodiments, the one or more sequences may be preset sequences.

In some embodiments, receiving the first message sent by the terminal may include the following.

The first message sent by the terminal may be received at the first time.
The first time may include at least one of the following:
The first time slot, the first transmission occasion, and the first timing.

In some embodiments, the first time slot includes at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is the indication information sent by the first network node;
The time slot determined according to the time of the first indication information.

Furthermore, or alternatively, the first transmission occasion may include at least one of the following:

The transmission occasion indicated by the first indication information;
The transmission occasion determined according to the time of the first indication information;
The transmission occasion determined according to the transmission occasion information;
The physical random access channel (PRACH) transmission occasion;
The sounding reference signal (SRS) transmission occasion or the time domain resource;
The transmission occasion determined according to the third offset, wherein the third offset is the offset with respect to the PRACH transmission occasion.

Furthermore, or alternatively, the first timing may include at least one of the following:
The timing determined according to the uplink transmission time of the first network node;
The timing determined according to the downlink transmission time of the first network node;
The timing determined according to the fourth offset, the fourth offset being the offset indicated by the first network node with respect to the current time.

In some embodiments, the first time may include k time slots, and the k may be a positive integer greater than 1. The k time slots may be k consecutive time slots, or the k time slots may be k consecutive uplink time slots, or the k time slots may be k transmission occasions.

In some embodiments, the first transmission occasion may include the plurality of transmission sub-occasions; and each of the plurality of transmission sub-occasions may be one time slot or a plurality of time slots.

It should be noted that an execution subject for performing the transmission method of the present embodiment may be the second network node capable of executing the above transmission method, and all implementation manners in the above embodiments of the transmission method may be applicable to the transmission method in the present embodiment, and same or similar beneficial effects may be achieved. To avoid repeated description, details will not be repeated in the present embodiment.

As shown in FIG. 7, FIG. 7 is a schematic structural diagram of the terminal according to an embodiment of the present disclosure. As shown in FIG. 7, the terminal 700 may include the following.

A first receiving module 701 may be configured to receive the configuration information sent by the first network node or the second network node.

A first sending module 702 may be configured to send the first message to the second network node according to the configuration information.

The configuration information may include the configuration of the first message; the first message may be configured to wake up the second network node.

In some embodiments, the terminal 700 may further include the following.

A third receiving module may be configured to receive the first indication information sent by the first network node.

The first indication information may be configured to instruct the terminal to send the first message.

In some embodiments, the first sending module 702 may include the following.

A first sending submodule may be configured to send the first message to the second network node according to the configuration information, when the received power of the terminal meets the preset threshold.

In some embodiments, the configuration information may include at least one of the following:
Offset information, being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
The transmission direction of the first message;
One or more uplink signals or channels;
One or more sequences.

In some embodiments, the first sending module 702 may include at least one of the following.
A second sending submodule may be configured to send the first message to the second network node during the transmission period of the second network node.

A third sending submodule may be configured to send the first message to the second network node during the transmission time window of the second network node.

A fourth sending submodule may be configured to send the first message to the second network node during the duration of the transmission time window of the second network node.

In some embodiments, the one or more sequences may be preset sequences.

In some embodiments, the first sending module 702 may include the following.

A fifth sending submodule may be configured to send the first message for n times to the second network node according to the configuration information, and the n may be a positive integer greater than or equal to 1.

In some embodiments, the first sending module 702 may include the following.

A sixth sending submodule may be configured to send the first message to the second network node at the first time.

The first time may include at least one of the following:
The first time slot, the first transmission occasion, and the first timing.

In some embodiments, the first time slot may include at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is the indication information sent by the first network node;
The time slot determined according to the time at which the terminal receives the first indication information.

Furthermore, or alternatively, the first transmission occasion may include at least one of the following:
The transmission occasion indicated by the first indication information;
The transmission occasion determined according to the time at which the terminal receives the first indication information;
The transmission occasion determined according to the transmission occasion information;
The physical random access channel (PRACH) occasion;
The sounding reference signal (SRS) transmission occasion or the time domain resource;
The transmission occasion determined according to the third offset, wherein the third offset is the offset with respect to the PRACH occasion.

Furthermore, or alternatively, the first timing may include at least one of the following:
The timing determined according the uplink transmission time of the first network node;
The timing determined according to the downlink transmission time of the first network node;
The timing determined according to the fourth offset, the fourth offset being the offset indicated by the first network node with respect to the current time.

In some embodiments, the first time may include k time slots, and the k may be a positive integer greater than 1. The k time slots may be k consecutive time slots, or the k time slots may be k consecutive uplink time slots, or the k time slots may be k transmission occasions.

In some embodiments, the first transmission occasion may include a plurality of transmission sub-occasions, wherein each of the plurality of transmission sub-occasions may be one time slot or a plurality of time slots.

In some embodiments, the terminal 700 may further include the following.

A fourth receiving module may be configured to receive the second indication information sent by the first network node.

The second indication information may indicate the time or the time window for the terminal to receive the configuration information, or may indicate the operating time or the activation time or the transmission time of the second network node.

It should be noted that the terminal of the present embodiment may be a device capable of executing the above transmission method. All implementation manners in the above embodiments of the transmission method may be applicable to the terminal, and same or similar beneficial effects may be achieved. To avoid repeated description, details will not be repeated in the present embodiment.

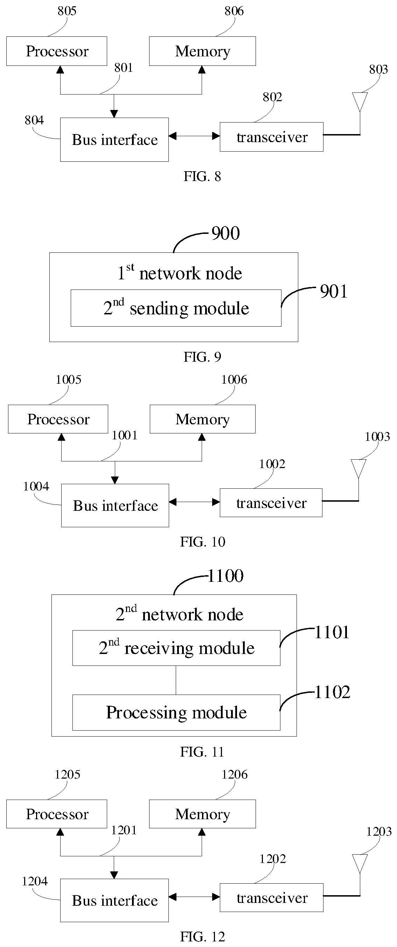

Specifically, as shown in FIG. 8, the present disclosure further provides an electronic device, including a bus 801, a transceiver 802, an antenna 803, a bus interface 804, a processor 805, and a memory 806.

The transceiver 802 may be configured to receive the configuration information sent by the first network node or the second network node;
The transceiver 802 may be configured to send the first message to the second network node according to the configuration information.

The configuration information may include the configuration of the first message; the first message may be configured to wake up the second network node.

In the embodiments of the present disclosure, the above electronic device may be interpreted as the terminal in the aforementioned transmission method.

In some embodiments, the transceiver 802 may further be configured to perform the following.

The transceiver 802 may further be configured to receive the first indication information sent by the first network node.

The first indication information may be configured to instruct the terminal to send the first message.

In some embodiments, sending the first message to the second network node according to the configuration information, may include the following.

When the received power of the terminal meets the preset threshold, the first message may be sent to the second network node according to the configuration information.

In some embodiments, the configuration information may include at least one of the following:
Offset information, the offset being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
The transmission direction of the first message;
One or more uplink signals or channels;
One or more sequences.

In some embodiments, the one or more sequences may be preset sequences.

In some embodiments, sending the first message to the second network node according to the configuration information, may include the following.

The first message may be sent for n times to the second network node according to the configuration information, and the n may be a positive integer greater than or equal to 1.

In some embodiments, sending the first message to the second network node, may include the following.

The first message may be sent to the second network node at the first time.

The first time may include at least one of the following:
The first time slot, the first transmission occasion, the first timing.
In some embodiments, the first time slot may include at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is the indication information sent by the first network node;
The time slot determined according to the time at which the terminal receives the first indication information.

Furthermore, or alternatively, the first transmission occasion may include at least one of the following:
The transmission occasion indicated by the first indication information;
The transmission occasion determined according to the time at which the terminal receives the first indication information;
The transmission occasion determined according to the transmission occasion information;
The physical random access channel (PRACH) occasion;
The sounding reference signal (SRS) transmission occasion or the time domain resource;
The transmission occasion determined according to the third offset, wherein the third offset is the offset with respect to the PRACH occasion.

Furthermore, or alternatively, the first timing may include at least one of the following:
The timing determined according to the uplink transmission time of the first network node;
The timing determined according to the downlink transmission time of the first network node;
The timing determined according to the fourth offset, the fourth offset being the offset indicated by the first network node with respect to the current time.

In some embodiments, the first time may include k time slots, and the k may be a positive integer greater than 1. The k time slots may be k consecutive time slots, or the k time slots may be k consecutive uplink time slots, or the k time slots may be k transmission occasions.

In some embodiments, the first transmission occasion may include a plurality of transmission sub-occasions, and each of the plurality of transmission sub-occasions may be one time slot or a plurality of time slots.

In some embodiments, the transceiver 802 may further be configured to perform the following.

The transceiver 802 may further be configured to receive the second indication information sent by the first network node.

The second indication information may indicate the time or the time window for the terminal to receive the configuration information, or may indicate the operating time or the activation time or the transmission time of the second network node.

In FIG. 8, a bus architecture may be represented by the bus 801, and the bus 801 may include any number of interconnected buses and bridges. The bus 801 may connect various circuits, including one or more processors represented by the processor 805 and memories represented by the memory 806, to each other. The bus 801 may further connect various other circuits, such as peripherals, voltage regulators, and power management circuits, to each other. The above configuration may be well known in the art, and will not be described in detail herein. A bus interface 804 may provide an interface between the bus 801 and the transceiver 802. The transceiver 802 may be one element or a plurality of elements, such as a plurality of receivers and a plurality of transmitters, and may provide a unit for communicating with various other apparatuses on a transmission medium. Data processed by the processor 805 may be transmitted on a wireless medium via an antenna 803, and the antenna 803 may further receive data and transfer data to the processor 805.

The processor 805 may be configured to manage the bus 801, perform general processing, and provide various functions including timing, peripheral interfaces, voltage regulation, power management, and other control functions. The memory 806 may be configured to store data used by the processor 805 when performing operations.

In some embodiments, the processor 805 may be a central processing unit (CPU), an application specific integrated circuit (ASIC), a field programmable gate array (FPGA), or a complex programmable logic device (CPLD).

It should be noted that the electronic device provided by the present embodiment may be a device capable of executing the above transmission method. All implementation manners in the above embodiments of the transmission method may be applicable to the electronic device, and same or similar beneficial effects may be achieved. To avoid repeated description, details will not be repeated in the present embodiment.

As shown in FIG. 9, FIG. 9 is a schematic structural diagram of the first network node according to an embodiment of the present disclosure. As shown in FIG. 9, the first network node 900 may include the following.

A second sending module 901 may be configured to send the configuration information or the second indication information to the terminal.

The configuration information may include the configuration of the first message; the first message may be configured to wake up the second network node.

The second indication information may indicate the time or the time window for the terminal to receive the configuration information, or may indicate the operating time or the activation time or the transmission time of the second network node.

In some embodiments, the first network node 900 may further include:
A third sending module may be configured to perform the following.

The third sending module may be configured to send the first indication information to the terminal.

The first indication information may be configured to instruct the terminal to send the first message.

In some embodiments, the third sending module may include the following.

A first sending sub-module may be configured to, when the measurement results of one candidate terminal or a plurality of candidate terminals meeting the preset threshold, send the first indication information to the target terminal. The target terminal may be one or more of the one candidate terminal or the plurality of candidate terminals.

In some embodiments, the configuration information may include at least one of the following:
Offset information, the offset being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.

In some embodiments, the one or more sequences maybe preset sequences.

It should be noted that the first network node in the present embodiment may be a device capable of executing the above transmission method. All implementation manners in the above embodiments of the transmission method may be applicable to the first network node, and same or similar beneficial effects may be achieved. To avoid repeated description, details will not be repeated in the present embodiment.

Specifically, as shown in FIG. 10, the present disclosure further provides an electronic device, including a bus 1001, a transceiver 1002, an antenna 1003, a bus interface 1004, a processor 1005, and a memory 1006.

The transceiver 1002 may be configured to send the configuration information or the second indication information to the terminal.

The configuration information may include the configuration of the first message; the first message may be configured to wake up the second network node.

The second indication information may indicate the time or the time window for the terminal to receive the configuration information, or may indicate the operating time or the activation time or the transmission time of the second network node.

In the embodiments of the present disclosure, the above electronic device may be the first network node in the aforementioned transmission method.

In some embodiments, the transceiver 1002 may further be configured to perform the following.

The transceiver 1002 may further be configured to send the first indication information to the terminal.

The first indication information may be configured to instruct the terminal to send the first message.

In some embodiments, sending first indication information to the terminal, may include the following.

In a case where measurement results of one candidate terminal or a plurality of candidate terminals meet the preset threshold, the first indication information may be sent to the target terminal. The target terminal may be one or more of the one candidate terminal or a plurality of candidate terminals.

In some embodiments, the configuration information may include at least one of the following:
Offset information, the offset being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node.

The second offset, being the offset of the reception time window of the second network node.

Furthermore, or alternatively, the transmission occasion information includes at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.

In some embodiments, the one or more sequences may be preset sequences.

In FIG. 10, a bus architecture may be represented by the bus 1001. The bus 1001 may include any number of interconnected buses and bridges. The bus 1001 may connect various circuits, including one or more processors represented by the processor 1005 and memories represented by the memory 1006, with each other. The bus 1001 may further connect various other circuits, such as peripherals, voltage regulators, and power management circuits, with each other. The above configuration may be well known in the art, and will not be described in detail herein. The bus interface 1004 may provide an interface between the bus 1001 and the transceiver 1002. The transceiver 1002 may be one element or a plurality of elements, such as a plurality of receivers and a plurality of transmitters, and may provide a unit for communicating with various other apparatuses on a transmission medium. Data processed by the processor 1005 may be transmitted on a wireless medium via the antenna 1003, and the antenna 1003 may receive data and transfer data to the processor 1005.

The processor 1005 may be configured to manage the bus 1001, perform general processing, and provide various functions, including timing, peripheral interfaces, voltage regulation, power management, and other control functions. The memory 1006 may be configured to store data used by the processor 1005 when performing operations.

In some embodiments, the processor 1005 may be a CPU, an ASIC, an FPGA, or a CPLD.

It should be noted that the electronic device provided by the present embodiment may be a device capable of executing the above transmission method. All implementation manners in the above embodiments of the transmission method may be applicable to the electronic device, and same or similar beneficial effects may be achieved. To avoid repeated description, details will not be repeated in the present embodiment.

As shown in FIG. 11, FIG. 11 is a schematic structural diagram of the second network node according to an embodiment of the present disclosure. As shown in FIG. 11, the second network node 1100 may include the following.

A second receiving module 1101 may be configured to receive the first message sent by the terminal.

A processing module 1102 may be configured to enable the second network node to perform downlink transmission or uplink transmission.

In some embodiments, the second network node 1100 may further include the following.

A fourth sending module may be configured to send the configuration information.

The configuration information may include the configuration of the first message.

In some embodiments, the second receiving module 1101 may include the following.

A first receiving submodule may be configured to receive first messages that are sent for n times by the terminal, and the n may be a positive integer greater than or equal to 1.

In some embodiments, the configuration information may include at least one of the following:
Offset information, the offset being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.
In some embodiments, the one or more sequences may be preset sequences.

In some embodiments, the second receiving module 1101 may include the following.

A second receiving submodule may be configured to receive the first message sent by the terminal at the first time.

The first time may include at least one of the following:
The first time slot, the first transmission occasion, and the first timing.

In some embodiments, the first time slot may include at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is the indication information sent by the first network node;
The time slot determined according to the time of the first indication information.

Furthermore, or alternatively, the first transmission occasion may include at least one of the following:
The transmission occasion indicated by the first indication information;
The transmission occasion determined according to the time of receiving the first indication information;
The transmission occasion determined according to the transmission occasion information;
The physical random access channel (PRACH) transmission occasion;
The sounding reference signal (SRS) transmission occasion or the time domain resource;
The transmission occasion determined according to the third offset, wherein the third offset is the offset with respect to the PRACH transmission occasion.

Furthermore, or alternatively, the first timing may include at least one of the following:
The timing determined according to the uplink transmission time of the first network node;
The timing determined according to the downlink transmission time of the first network node;
The timing determined according to the fourth offset, the fourth offset being the offset indicated by the first network node with respect to the current time.

In some embodiments, the first time may include k time slots, and the k may be a positive integer greater than 1. The k time slots may be k consecutive time slots, or the k time slots may be k consecutive uplink time slots, or the k time slots may be k transmission occasions.

In some embodiments, the first transmission occasion may include a plurality of transmission sub-occasions, and each of the plurality of transmission sub-occasions may be one time slot or a plurality of time slots.

It should be noted that the second network node of the present embodiment may be a device capable of executing the above transmission method. All implementation manners in the above embodiments of the transmission method may be applicable to the second network node, and same or similar beneficial effects may be achieved. To avoid repeated description, details will not be repeated in the present embodiment.

Specifically, as shown in FIG. 12, the present disclosure further provides an electronic device, including a bus 1201, a transceiver 1202, an antenna 1203, a bus interface 1204, a processor 1205, and a memory 1206.

The transceiver 1202 may be configured to receive the first message sent by the terminal.

Further, the processor 1205 may be configured to enable the second network node to perform downlink transmission or uplink transmission.

In the embodiments of the present disclosure, the above electronic device may be the second network node in the aforementioned transmission method.

In some embodiments, the transceiver 1202 may further be configured to perform the following.

The transceiver 1202 may further be configured to send the configuration information.

The configuration information may include the configuration of the first message.

In some embodiments, receiving the first message sent by the terminal, may include the following.

The first message that is sent for n times by the terminal may be received, and the n may be a positive integer greater than or equal to 1.

In some embodiments, the configuration information may include at least one of the following:
Offset information, the offset being the offset associated with the second network node;
Transmission occasion information;
Configuration information of the second network node;
Configuration information of the first message.

In some embodiments, the offset information may include at least one of the following:
The first offset, being the offset of the system frame number (SFN) of the first network node with respect to the SFN of the second network node, or being the offset of the SFN of the second network node with respect to the SFN of the first network node;
The second offset, being the offset of the reception time window of the second network node.

Furthermore, or alternatively, the transmission occasion information may include at least one of the following:
The first transmission occasion, including the occasion for the second network node to receive uplink transmission;
The second transmission occasion, including the occasion for the terminal to send uplink transmission.

Furthermore, or alternatively, the configuration information of the second network node may include at least one of the following:
The transmission period of the second network node;
The transmission time window of the second network node;
The duration of the transmission time window of the second network node;
The parameter related to the carrier spacing of the second network node;
The time division duplex (TDD) configuration of the second network node.

Furthermore, or alternatively, the configuration information of the first message may include at least one of the following:
One or more uplink signals or channels;
One or more sequences;
The transmission direction of the first message.

In some embodiments, the one or more sequences may be preset sequences.

In some embodiments, receiving the first message sent by the terminal, may include the following.

The first message sent by the terminal may be received at a first time.

The first time may include at least one of the following:
The first time slot, the first transmission occasion, and the first timing.

In some embodiments, the first time slot may include at least one of the following:
The uplink time slot of the second network node determined according to the TDD configuration of the second network node;
The time slot within the system frame or subframe, wherein the system frame or subframe is determined according to at least one item in the offset information;
The time slot indicated by the first indication information, wherein the first indication information is the indication information sent by the first network node;
The time slot determined according to the time of the first indication information.

Furthermore, or alternatively, the first transmission occasion may include at least one of the following:
The transmission occasion indicated by the first indication information;
The transmission occasion determined according to the time of receiving the first indication information;
The transmission occasion determined according to the transmission occasion information;
The physical random access channel (PRACH) transmission occasion;
The sounding reference signal (SRS) transmission occasion or the time domain resource;
The transmission occasion determined according to the third offset, wherein the third offset is the offset with respect to the PRACH transmission occasion.

Furthermore, or alternatively, the first timing may include at least one of the following:
The timing determined according to the uplink transmission time of the first network node;
The timing determined according to the downlink transmission time of the first network node;
The timing determined according to the fourth offset, the fourth offset being the offset indicated by the first network node with respect to the current time.

In some embodiments, the first time may include k time slots, and the k may be a positive integer greater than 1. The k time slots may be k consecutive time slots, or the k time slots may be k consecutive uplink time slots, or the k time slots may be k transmission occasions.

In some embodiments, the first transmission occasion may include a plurality of transmission sub-occasions, and each of the plurality of transmission sub-occasions may be one time slot or a plurality of time slots.

In FIG. 12, a bus architecture may be represented by the bus 1201. The bus 1201 may include any number of interconnected buses and bridges. The bus 1201 may connect various circuits, including one or more processors represented by the processor 1205 and memories represented by the memory 1206, with each other. The bus 1201 may further connect various other circuits, such as peripherals, voltage regulators, and power management circuits, with each other. The above configuration may be well known in the art, and will not be described in detail herein. The bus interface 1204 may provide an interface between the bus 1201 and the transceiver 1202. The transceiver 1202 may be one element or a plurality of elements, such as a plurality of receivers and a plurality of transmitters, and may provide a unit for communicating with various other apparatuses on a transmission medium. Data processed by the processor 1205 may be transmitted on a wireless medium via the antenna 1203, and the antenna 1203 may receive data and transfer data to the processor 1205.

The processor 1205 may be configured to manage the bus 1201, perform general processing, and provide various functions including timing, peripheral interfaces, voltage regulation, power management, and other control functions. The memory 1206 may be configured to store data used by the processor 1205 when performing operations.

In some embodiments, the processor 1205 may be a CPU, an ASIC, an FPGA, or a CPLD.

It should be noted that the electronic device provided by the present embodiment may be a device capable of executing the above transmission method. All implementation manners in the above embodiments of the transmission method may be applicable to the electronic device, and same or similar beneficial effects may be achieved. To avoid repeated description, details will not be repeated in the present embodiment.

According to the embodiments of the present disclosure an electronic device may be provided and include: a processor, a memory, and a program stored on the memory and executable on the processor. When the program is executed by the processor, the program may implement each process of the transmission method in the above embodiments shown in FIGS. 1 to 4; or, when the program is executed by the processor, the program may implement each process of the transmission method in the embodiment shown in FIG. 5, and the same technical effects may be achieved; or, when the program is executed by the processor, the program may implement each process of the transmission method in the embodiment shown in FIG. 6, and the same technical effects may be achieved. To avoid repetition, details will not be repeated herein.

The present disclosure further provides a computer-readable storage medium, on which a computer program may be stored. When executed by a processor, the computer program may implement each process of the transmission method in the embodiments shown in FIGS. 1 to 4; or, when executed by a processor, the computer program may implement each process of the transmission method in the embodiment shown in FIG. 5; or, when executed by a processor, the computer program may implement each process of the transmission method in the embodiment shown in FIG. 6. The same technical effects may be achieved. To avoid repetition, details will not be repeated herein. The computer-readable storage medium may be, for example, a read-only memory (ROM), a random access memory (RAM), a magnetic disk, or an optical disk. The energy-saving efficiency of the communication system may be improved.

It should be noted that, in the present disclosure, terms "comprise", "include" or any other variation thereof may be intended to cover non-exclusive inclusion, such that a process, a method, an article, or an apparatus that includes a list of elements includes not only the listed elements but also other elements that are not expressly listed, or also includes elements that are inherently included in the process, the method, the article, or the apparatus. Without further limitation, an element defined by a phrase "including a..." does not exclude presence of additional identical elements in the process, the method, the article, or the apparatus that includes the element.

According to description of the above embodiments, any ordinary skilled artisan in the art may clearly understand that the methods of the above embodiments may be implemented by means of software and a necessary general hardware platform, and of course may further be implemented by hardware. In various case, the former may be a better implementation. Based on the above understanding, the technical solution of the present disclosure essentially or a part thereof contributing to the related art may be embodied in the form of a software product, which may be stored in a storage medium (such as the ROM/RAM, the magnetic disk, or the optical disk) and may include various instructions for enabling a terminal (which may be a mobile phone, a computer, a server, an air conditioner, or a network node, and so on) to perform the method described in various embodiments of the present disclosure.

The embodiments of the present disclosure are described above by referring to the accompanying drawings, however, the present disclosure is not limited to the above specific embodiments. The above specific embodiments are merely illustrative rather than restrictive. Under inspiration of the present disclosure, any ordinary skilled artisan in the art may make various forms without departing from the purpose of the present disclosure and the scope of the claims, all of which shall fall within the scope of the present disclosure.

## Claims

1. A transmission method, applied to a terminal, the method comprising:
receiving configuration information sent by a first network node or a second network node; and
sending a first message to the second network node according to the configuration information;
wherein, the configuration information comprises configuration of the first message; and the first message is configured to wake up the second network node.

2. The transmission method according to claim 1, wherein, the method further comprises:
receiving first indication information sent by the first network node;
wherein, the first indication information is configured to instruct the terminal to send the first message.

3. The transmission method according to claim 1, wherein, the sending a first message to the second network node according to the configuration information, comprises:
sending the first message to the second network node according to the configuration information when a received power of the terminal meeting a preset threshold.

4. The transmission method according to claim 1, wherein, the configuration information comprises at least one of the following:
offset information, wherein, an offset is an offset associated with the second network node;
transmission occasion information;
configuration information of the second network node; and
configuration information of the first message.

5. The transmission method according to claim 4, wherein,
the offset information comprises at least one of the following:
a first offset, being an offset of a system frame number (SFN) of the first network node with respect to an SFN of the second network node, or being an offset of the SFN of the second network node with respect to the SFN of the first network node;
a second offset, being an offset of a reception time window of the second network node;
and/or
the transmission occasion information comprises at least one of the following:
a first transmission occasion, comprising an occasion for the second network node to receive uplink transmission;
a second transmission occasion, comprising an occasion for the terminal to perform uplink transmission;
and/or
the configuration information of the second network node comprises at least one of the following:
a transmission period of the second network node;
a transmission time window of the second network node;
a duration of the transmission time window of the second network node;
a parameter related to a carrier spacing of the second network node;
time division duplex (TDD) configuration of the second network node;
and/or
the configuration information of the first message comprises at least one of the following:
a transmission direction of the first message;
one or more uplink signals or channels; and
one or more sequences.

6. The transmission method according to claim 5, wherein, the sending a first message to the second network node according to the configuration information, comprises at least one of the following:
sending the first message to the second network node during the transmission period of the second network node;
sending the first message to the second network node during the transmission time window of the second network node; and
sending the first message to the second network node during the duration of the transmission time window of the second network node.

7. The transmission method according to claim 5, wherein, the one or more sequences are one or more preset sequences.

8. The transmission method according to any one of claims 1 to 3, wherein, the sending a first message to the second network node according to the configuration information, comprises: sending the first message for n times to the second network node according to the configuration information, wherein the n is a positive integer greater than or equal to 1.

9. The transmission method according to claim 4, wherein, the sending a first message to the second network node, comprises:
sending the first message to the second network node at a first time;
wherein, the first time comprises at least one of the following: a first time slot, a first transmission occasion, and a first timing.

10. The transmission method according to claim 9, wherein,
the first time slot comprises at least one of the following:
an uplink time slot of the second network node determined according to the TDD configuration of the second network node;
a time slot within a system frame or subframe; wherein the system frame or subframe is determined according to at least one item in the offset information;
a time slot indicated by first indication information, wherein the first indication information is indication information sent by the first network node; and
a time slot determined according to a time at which the terminal receives the first indication information;
and/or
the first transmission occasion comprises at least one of the following:
a transmission occasion indicated by the first indication information;
a transmission occasion determined according to the time at which the terminal receives the first indication information;
a transmission occasion determined according to the transmission occasion information;
a physical random access channel (PRACH) occasion;
a sounding reference signal (SRS) transmission occasion or a time domain resource;
a transmission occasion determined according to a third offset, wherein the third offset is an offset with respect to the PRACH occasion;
and/or
the first timing comprises at least one of the following:
a timing determined according to an uplink transmission time of the first network node;
a timing determined according to a downlink transmission time of the first network node;
a timing determined according to a fourth offset, where the fourth offset is an offset with respect to a current time indicated by the first network node.

11. The transmission method according to claim 9 or 10, wherein,
the first time comprises k time slots, the k is a positive integer greater than 1; and
the k time slots are k consecutive time slots, or the k time slots are k consecutive uplink time slots, or the k time slots are k transmission occasions.

12. The transmission method according to claim 9 or 10, wherein, the first transmission occasion comprises a plurality of transmission sub-occasions, each of the plurality of transmission sub-occasions is one time slot or a plurality of time slots.

13. The transmission method according to claim 1, wherein, the method further comprises:
receiving second indication information sent by the first network node;
wherein, the second indication information indicates a time or a time window for the terminal to receive the configuration information or indicates an operating time or an activation time or a transmission time of the second network node.

14. A transmission method, applied to a first network node, the method comprising:
sending configuration information or second indication information to a terminal;
wherein, the configuration information comprises configuration of a first message; the first message is configured to wake up a second network node;
the second indication information indicates a time or a time window for the terminal to receive the configuration information or indicates an operating time or an activation time or a transmission time of the second network node.

15. The transmission method according to claim 14, wherein, the method further comprises:
sending first indication information to the terminal;
wherein, the first indication information is configured to instruct the terminal to send the first message.

16. The transmission method according to claim 15, wherein, the sending first indication information to the terminal, comprises:
when measurement results of one candidate terminal or a plurality of candidate terminals meeting a preset threshold, sending the first indication information to a target terminal, wherein the target terminal is one or more of the one candidate terminal or a plurality of candidate terminals.

17. The transmission method according to any one of claims 14 to 16, wherein the configuration information comprises at least one of the following:
offset information, wherein, an offset is an offset associated with the second network node;
transmission occasion information;
configuration information of the second network node;
configuration information of the first message.

18. The transmission method according to claim 17, wherein,
the offset information comprises at least one of the following:
a first offset, being an offset of a system frame number (SFN) of the first network node with respect to an SFN of the second network node, or being an offset of the SFN of the second network node with respect to the SFN of the first network node;
a second offset, being an offset of a reception time window of the second network node;
and/or
the transmission occasion information comprises at least one of the following:
a first transmission occasion, comprising an occasion for the second network node to receive uplink transmission;
a second transmission occasion, comprising an occasion for the terminal to perform uplink transmission;
and/or
the configuration information of the second network node comprises at least one of the following:
a transmission period of the second network node;
a transmission time window of the second network node;
a duration of the transmission time window of the second network node;
a parameter related to a carrier spacing of the second network node;
time division duplex (TDD) configuration of the second network node;
and/or
the configuration information of the first message comprises at least one of the following:
one or more uplink signals or channels;
one or more sequences;
a transmission direction of the first message.

19. The transmission method according to claim 18, wherein, the one or more sequences are one or more preset sequences.

20. A transmission method, applied to a second network node, the method comprising:
receiving a first message sent by a terminal;
enabling the second network node to perform downlink transmission or uplink transmission.

21. The transmission method according to claim 20, wherein, the transmission method further comprises:
sending configuration information;
wherein the configuration information comprises configuration of the first message.

22. The transmission method according to claim 20, wherein the receiving a first message sent by a terminal, comprises:
receiving the first message that is sent for n times by the terminal, wherein the n is a positive integer greater than or equal to 1.

23. The transmission method according to claim 21, wherein, the configuration information comprises at least one of the following:
offset information, wherein, an offset is an offset associated with the second network node;
transmission occasion information;
configuration information of the second network node;
configuration information of the first message.

24. The transmission method according to claim 23, wherein,
the offset information comprises at least one of the following:
a first offset, being an offset of a system frame number (SFN) of the first network node with respect to an SFN of the second network node, or being an offset of the SFN of the second network node with respect to the SFN of the first network node;
a second offset, being an offset of a reception time window of the second network node;
and/or
the transmission occasion information comprises at least one of the following:
a first transmission occasion, comprising an occasion for the second network node to receive uplink transmission;
a second transmission occasion, comprising an occasion for the terminal to send uplink transmission;
and/or
the configuration information of the second network node comprises at least one of the following:
a transmission period of the second network node;
a transmission time window of the second network node;
a duration of the transmission time window of the second network node;
a parameter related to a carrier spacing of the second network node;
time division duplex (TDD) configuration of the second network node;
and/or
the configuration information of the first message comprises at least one of the following:
one or more uplink signals or channels;
one or more sequences;
a transmission direction of the first message.

25. The transmission method according to claim 24, wherein the one or more sequences are one or more preset sequences.

26. The transmission method according to claim 23, wherein, the receiving a first message sent by a terminal, comprises:
receiving, at a first time, the first message sent by the terminal;
wherein the first time comprises at least one of the following: a first time slot, a first transmission occasion, a first timing.

27. The transmission method according to claim 26, wherein,
the first time slot comprises at least one of the following:
an uplink time slot of the second network node determined according to the TDD configuration of the second network node;
a time slot within a system frame or subframe; wherein the system frame or subframe is determined according to at least one item in the offset information;
a time slot indicated by first indication information, wherein the first indication information is indication information sent by the first network node;
a time slot determined according to a time of the first indication information;
and/or
the first transmission occasion comprises at least one of the following:
a transmission occasion indicated by the first indication information;
a transmission occasion determined according to the time of the first indication information;
a transmission occasion determined according to the transmission occasion information;
a physical random access channel (PRACH) transmission occasion;
a sounding reference signal (SRS) transmission occasion or a time domain resource;
a transmission occasion determined according to a third offset, wherein the third offset is an offset with respect to the PRACH transmission occasion;
and/or
the first timing comprises at least one of the following:
a timing determined according to an uplink transmission time of the first network node;
a timing determined according to a downlink transmission time of the first network node;
a timing determined according to a fourth offset, where the fourth offset is an offset with respect to a current time indicated by the first network node.

28. The transmission method according to claim 26 or 27, wherein,
the first time comprises k time slots, the k is a positive integer greater than 1; and
the k time slots are k consecutive time slots, or the k time slots are k consecutive uplink time slots, or the k time slots are k transmission occasions.

29. The transmission method according to claim 26 or 27, wherein, the first transmission occasion comprises a plurality of transmission sub-occasions, wherein each of the plurality of transmission sub-occasions is one time slot or a plurality of time slots.

30. A terminal, comprising:
a first receiving module, configured to receive configuration information sent by a first network node or a second network node;
a first sending module, configured to send a first message to the second network node according to the configuration information;
wherein the configuration information comprises configuration of the first message; the first message is configured to wake up the second network node.

31. An electronic device, comprising a transceiver, wherein, the transceiver is configured to:
receive configuration information sent by a first network node or a second network node;
send a first message to the second network node according to the configuration information;
wherein the configuration information comprises configuration of the first message; the first message is configured to wake up the second network node.

32. A first network node, comprising:
a second sending module, configured to send configuration information or second indication information to a terminal;
wherein the configuration information comprises configuration of a first message; the first message is configured to wake up a second network node;
the second indication information is configured to indicate a time or a time window for the terminal to receive the configuration information or indicate an operating time or an activation time or a transmission time of the second network node.

33. An electronic device, comprising a transceiver, wherein, the transceiver is configured to:
send configuration information or second indication information to a terminal;
wherein the configuration information comprises configuration of a first message; the first message is configured to wake up a second network node;
the second indication information is configured to indicate a time or a time window for the terminal to receive the configuration information or indicate an operating time or an activation time or a transmission time of the second network node.

34. A second network node, comprising:
a second receiving module, configured to receive a first message sent by a terminal;
a processing module, configured to enable the second network node to perform downlink transmission or uplink transmission.

35. An electronic device, comprising a transceiver and a processor, wherein,
the transceiver is configured to receive a first message sent by a terminal; and
the processor is configured to enable the electronic device to perform downlink transmission or uplink transmission.

36. An electronic device, comprising: a processor, a memory, and a program stored on the memory and executable on the processor, wherein, the program, when being executed by the processor, is configured to implement operations of the transmission method according to any one of claims 1 to 13; or, the program, when being executed by the processor, is configured to implement operations of the transmission method according to any one of claims 14 to 19; or, the program, when being executed by the processor, is configured to implement operations of the transmission method according to any one of claims 20 to 29.

37. A computer-readable storage medium, having a computer program stored thereon, wherein, the computer program, when being executed by a processor, is configured to implement operations of the transmission method according to any one of claims 1 to 13; or, the computer program, when being executed by a processor, is configured to implement operations of the transmission method according to any one of claims 14 to 19; or, the computer program, when being executed by a processor, is configured to implement operations of the transmission method according to any one of claims 20 to 29.
